# EUROPEAN PATENT SPECIFICATION

(11) **EP 3 962 779 B1**
(45) Date of publication and mention of the grant of the patent: **12.04.2023**
(21) Application number: 20723225.7
(22) Date of filing: 29.04.2020
(51) Int. Cl.: B62D 21/15, B60N 3/00, B62D 33/06

(54) **CRASH RELAX BED PLATFORM**
KOLLISIONSSICHERE RUHELIEGEPLATTFORM
PLATE-FORME À LIT AMORTISSEUR DE CHOCS

(30) Priority: 29.04.2019 NL 2023025
(43) Date of publication of application: 09.03.2022
(73) Proprietor: DAF Trucks N.V., 5643 TW Eindhoven (NL)
(72) Inventor: ROESTENBURG, Adam, 5643 TW Eindhoven (NL); SCHROVER, Lieuwe Petrus Henricus, 5643 TW Eindhoven (NL); VOSSEN, Flip, 5643 TW Eindhoven (NL)
(74) Representative: V.O.
(86) International application number: PCT/NL2020/050268
(87) International publication number: WO 2020/222642

(56) References cited:
- EP-A1- 1 607 025
- WO-A1-2011/126428

## Description

### BACKGROUND OF THE INVENTION

The invention relates to vehicles and in particular heavy goods vehicles also known as trucks. Heavy goods vehicles may have one or more beds or bunks installed in the cabin for drivers seeking rest. It is common practice to place these beds behind the front seats - in particular the driver seat. From a safety perspective this may be undesirable, since, during a collision of a truck, a truck's cabin may deform and cause the bed to collide. In worst case situation, the bed, in particular a heavy bed platform may impact the occupant seats and even penetrate the seats, which is a big risk for the occupant/driver sitting in it. The bed platform may thus cause, in case of a strong impact due to a collision or forced break manoeuvre, risk of injury to the occupants. This is especially the case for a slatted bed platform, wherein the slats are aligned in the driving direction. The invention aims to reduce the severity and probability of injury due to the bed platform colliding with the occupant seats in the vehicle cabin during a collision. EP1607025 shows a slatted bed platform which is located behind the front seats of a truck heavy goods vehicle wherein the frame comprises a central frame and two outer portions.

### SUMMARY OF THE INVENTION

Accordingly, an object of the invention is to prevent injury to drivers and/or passengers of a heavy goods vehicle when a bed platform collides with occupant seats in a vehicle cabin. The invention provides for a slatted bed platform according to claim 1.

Accordingly a substantial mass reduction is achieved of the bed platform that may impact the driver seat.

### BRIEF DESCRIPTION OF THE DRAWINGS

Figure 1 shows a front view of a vehicle cabin with a bed platform.
Figure 2 shows a top view of a vehicle cabin with a second embodiment.
Figure 3 shows a top view of a vehicle cabin with a further detail of the second embodiment front, rear and outer beams.
Figure 4 shows a top view where slats are pitched in a collision condition.
Figure 5 shows another embodiment of a slatted bed platform.
Figure 6 shows a bottom view of the embodiment in Figure 5
   and
Figure 7 shows exemplary slat connections.

### DETAILED DESCRIPTION

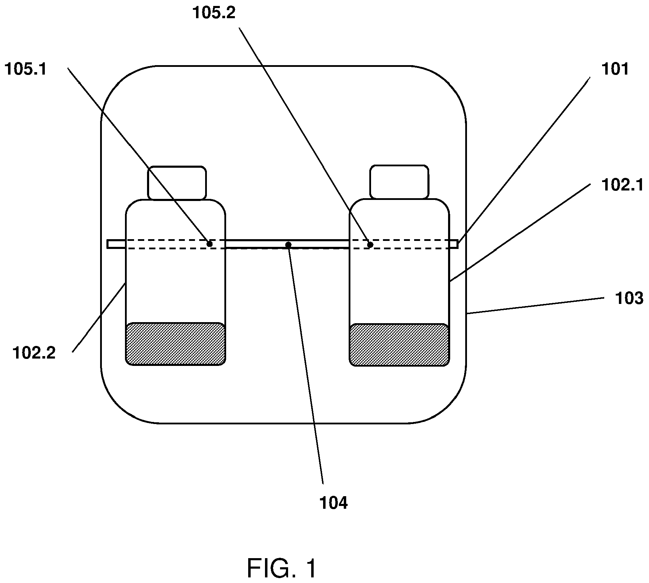

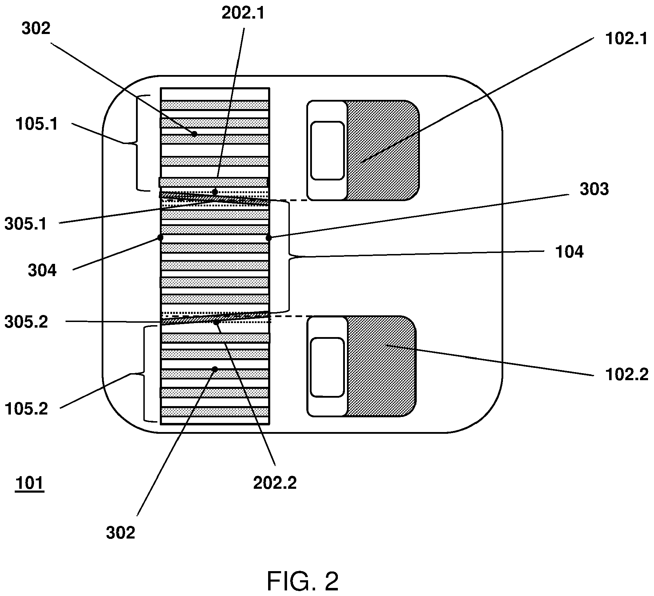

In Figure 1 a front view of a slatted bed platform 101 is shown. The bed platform may be positioned flat with its length transverse to a longitudinal direction of a vehicle inside the vehicle cabin 103. Such a design is common practice in the design of heavy goods vehicles especially long range heavy goods vehicles. The bed platform is located behind occupant seats 102.1 & 102.2 inside the vehicle and provides a platform for a sleeping location. The bed platform 101 has a central portion 104 and outer portions 105.1 & 105.2. The central portion 104 may be approximately in the centre of the width of the vehicle's cabin 103. It is important that the central portion 104 is not in line with one or more of the occupant seats 102 when viewed from the front of the vehicle. The outer portions 105.1 & 105.2 are the bed platform portions that extend behind the one or more seats 102 in a lateral direction of the vehicle relative to the vehicles longitudinal direction. The outer bed platform portions 105 may be connected to weakened connector portions 202 (shown in Figure 2). The weakened connector portions may disconnect or deform, eg. by buckling, deflecting, collapsing or fracturing which may change a dimension of the weakened connector portion to allow the central portion 104 to move sideways past the occupant seats 102. The extension and mass of the outer portions is lower than the central portions. In the present embodiment the outer portions 105 may buckle, deflect, collapse deform, fracture or equivalent when the bed platform 101 may be pressed against the occupant seats 102 in a longitudinal direction relative to the vehicle, and due to the relative low mass form a limited impact factor to the occupant seat when colliding. The number of the outer portions 105.1 & 105.2 and seats 102.1 & 102.2 are not a determining factor as long as each seat may be associated with the corresponding weakened connector portion of the bed platform. That is to say that if there is only one seat the bed platform may have only one weakened connector portion.

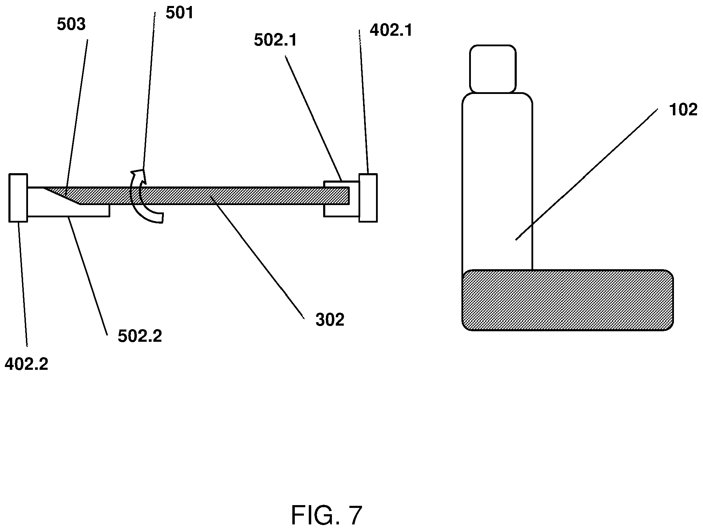

In Figure 2 the slatted bed platform 101 of Figure 1 is shown formed by a beam structure having a central portion 104 and outer portions 105.1 and 105.2. The slatted bed platform 101 has slats 302 running from the front 303 of the bed platform 101 relative to the longitudinal direction of the vehicle to the rear 304 of the bed platform 101. A slatted bed platform 101 is commonly used for improved sleeping comfort. The slats 302 are connected to the bed platform 101 with slat connections (to be shown in Figure 7). The beam structure may comprise one or more reinforcement members 305 near the weakened connector portion 202 of the beam structure in the longitudinal direction of the vehicle. The said reinforcement members 305 may assist to guide the central portion 104 past the occupant seats 102 by ensuring the platform is disconnected along the weakened connector portions. Conversely the amount of energy required to deform the central portion 104 is increased to help the central portion 104 retain its shape. The weakened connector portions 202 may lower the energy required to buckle, deform, deflect or collapse the outer portions 105 of the bed platform. Where it may be also understood that weakened may not be limited to buckling, deflecting, deforming or collapsing when the outer portions 105 of the bed platform 101 remain behind the occupant seats 102 and the central portion 104 moves sideways past the occupant seats 102. The reinforcement members 305 may converge at the front surface 303 of the bed platform 101 to taper the shape of the central portion 104 between the occupant seats 102 and to facilitate the entering of the central portion 104 between the seats 102. The converging of the reinforcement members 305 may not be essential and a parallel configuration relative to each other may also be understood to be included and other configurations sufficient to pass by the occupant seats 102.

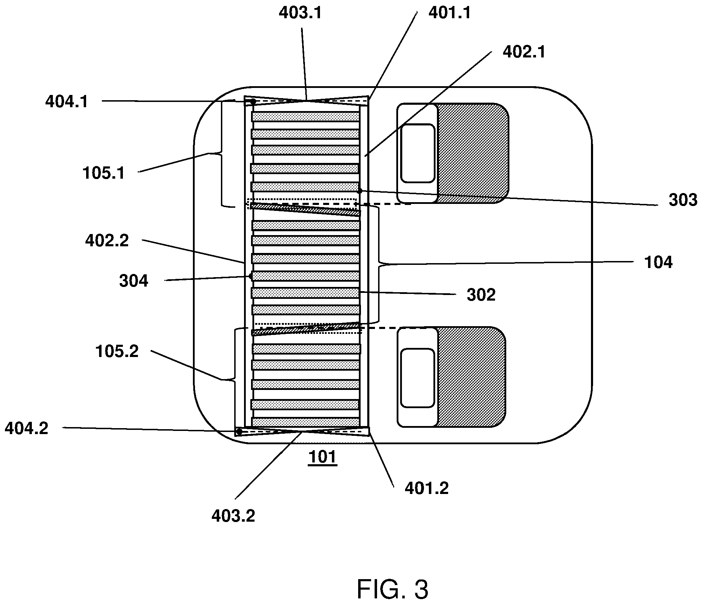

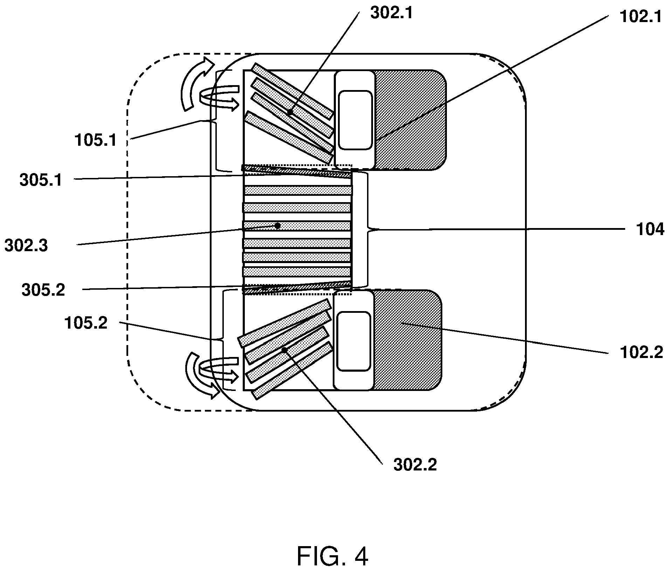

In Figure 3, slatted bed platform 101 is shown with supporting beam structure formed by beams 401 & 402 which run along the front 303, rear 304 and outer side surfaces 404 of the bed platform 101 relative to a longitudinal direction of the vehicle. The supporting beams 401 & 402 connect to the slats 302 with slat connections (shown in Figure7). The supporting side beams 401, also called the side beams 401 in the outer sides 404 of the bed platform 101, in the lateral direction relative to the longitudinal direction of the vehicle, have central weakenings 403 to assist the outer portions 105 to remain behind the one or more occupant seats 102 when the central portion 104 moves sideways past the occupant seats 102. The side beams 401 may buckle, deform, deflect or collapse due to a reduction of a cross sectional area, a curving of the beams centroid away from an axis of an applied load and other stress raisers which may be applicable. In Figure 4, the release slats 302.1 & 302.2 forming the outer portions 105 of the slatted bed platform 101 are shown to be released upwards and sidewards. That is to say that slats pitching upward may refer to releasing slats from the release structure while still being tied to the front support beam 402 by a catch structure.

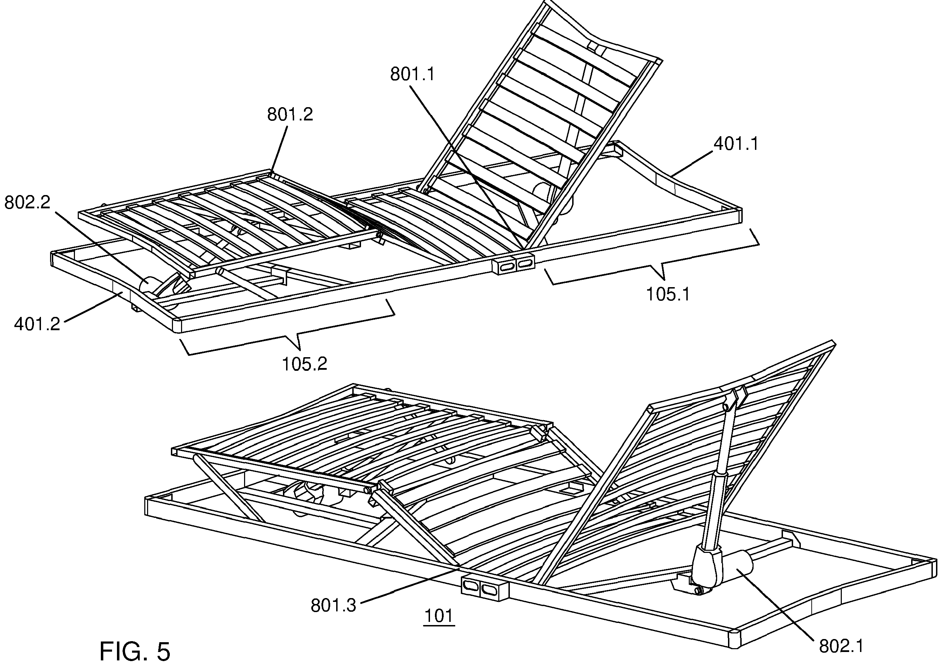

In Figure 5, a slatted bed platform is shown with the outer portions 105 of the bed platform 101 able to recline relative to the bed platform 101 through one or more hinge connections 801. The outer portions 105 may be raised by one or more actuators 802. The actuators 802 are preferably electrically operated actuators but may manually be operated or by other actuating means.

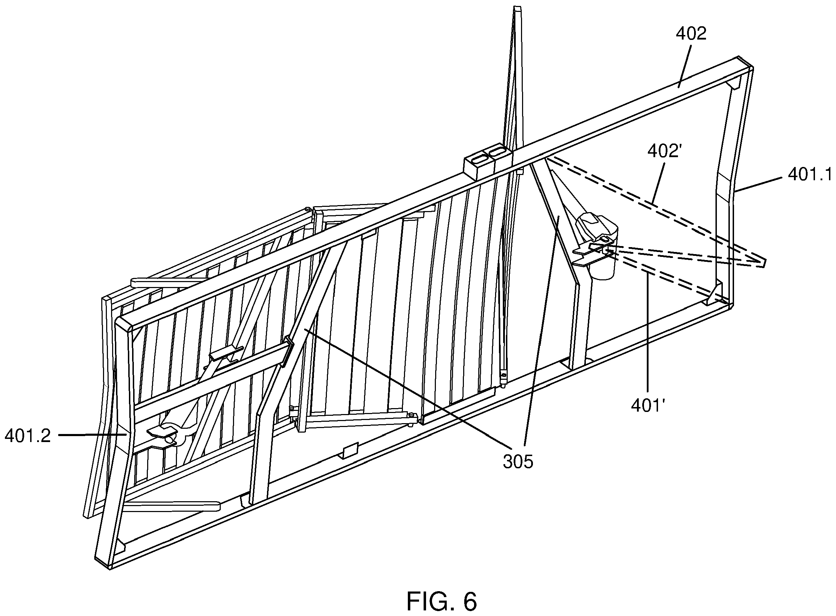

In Figure 6, the slatted bad is shown from a bottom view angle, and it is shown that the central portion comprises one or more reinforcement members 305 following the said weakened connector portion in the longitudinal direction of the vehicle; the said reinforcement portion assists in guiding the central portion past the occupant seat. Front support beam 402 has a weakening or hinge spot next to the reinforcement member 305 so that it may buckle and deform along a side of the reinforcement member (see dashed beam 402'). Similarly, the side beam 401 deforms by its weakening into deformed side beam 401'.

In Figure 7 a single slat is shown in side view with connections 502 & 503 to the supporting beams 402. This same arrangement may be used for slats in the outer portions 105 of the bed platform 101. The connection 502.1 at the front of the bed platform 101 has a catch structure which may retain the slats 302 in a catched position in case of a collision with the vehicle. The catch structure keeps the slats to remain tied to the front of the bed platform during the collision of the vehicle; i.e. tied to the side of the bed platform closest to the occupant seats 102 in the longitudinal direction of the vehicle. The catch structure may be provided by any suitable means of fixing the slats 302 to the supporting beam 402.1 along the front 303 of the bed platform 101 and can include a hinge, bolt, bush, gripping or pinching hooks as long as it forms a secure connection which does not release the mentioned slats during the collision of the vehicle. The connections 502.2 along the rear of the bed platform may have a release structure at least for the slats 302 which form the outer portions 105 of the bed platform 101 and which are in line with the occupant seats 102 in a longitudinal direction of the vehicle also called the release slats. That is to say the release slats may be understood to be the slats which form the outer portions 105 of the bed platform directly behind the occupant seats 102 which may collide with the occupant seats 102 during a collision of the vehicle. The release connections 502.2 may allow the release slats 302 released upward 501 e.g. via a ramp 503 when the connections 502.2 may move or may be pressed in the direction along the length of the slats 302. When the vehicle collides or impacts, release connections 502.2 no longer connect release slats to the bed platform. A ramp 503 may be also understood to include other means of releasing a slat 302 upwards such as a cam surface, pivoting lever or sprung actuator. The slats may have other movements due to the nature of a collision, such as yawing or rolling during pitching and are included in the understanding of the release slats pitching upward.

## Claims

1. A slatted bed platform (101) adapted to lay transverse to a vehicle behind one or more occupant seats inside a vehicle cabin, the bed platform comprising a supporting beam structure forming a central portion (104) and one or more outer portions (105); wherein the one or more outer portions is adapted to extend behind the seat in a lateral direction of the vehicle when the bed platform is installed in the vehicle;
wherein the supporting beam structure has one or more weakened connector portions (202) adapted to connect the said central portion to the vehicle cabin and/or the one or more outer portions;
wherein the said weakened connector portion is adapted to allow the central portion to move forward past the said occupant seats and the said outer portions to remain behind the said seats by disconnection and/or deformation of weakened connector portions from the central portion.

2. A bed platform according to claim 1, wherein the central portion comprises one or more reinforcement members (305) following the said weakened connector portion in the longitudinal direction of the vehicle when the bed platform is installed in the vehicle;
the said reinforcement members assisting in guiding the central portion past the occupant seat.

3. A bed platform according to any preceding claim wherein the weakened connector portions comprise foldable connector portions constructed to fold the outer portions during the collision of the vehicle.

4. A bed platform according to any of the preceding claims, wherein the outer portions are supported by container covers, said container covers providing access to a storage container.

5. A bed platform according to any preceding claim, wherein the supporting beam structure comprises supporting beams (401, 402) which run along the front, rear and outer side surfaces of the bed platform relative to a longitudinal direction of the vehicle when the bed platform is installed in the vehicle, wherein the supporting beams (401) in the outer side surfaces of the bed platform in the lateral direction relative to the longitudinal direction of the vehicle are weakened to assist the outer portions to remain behind the one or more occupant seats when the central portion moves past the occupant seats.

6. A bed platform according to any preceding claim, further comprising slats (302) that are connected to said supporting beam structure by slat connections;
wherein said slat connections have a catch structure at the front of the bed platform which retains the slats to the front supporting beam and a release structure at the rear supporting beam at least on the said outer portion of the bed platform which allow the slats released from the supporting beam.

7. A bed platform according to any preceding claim further comprising recliners which recline the outer portions relative to the central portion of the bed platform; wherein the recliner is actuated by one or more actuators (802) to recline the out portions preferably one or more electric motors; wherein the recliner is housed in an outer portion of the bed platform.

8. A bed platform according to claim 7 when dependent on 4 wherein the container covers contain recesses in the top surface for at least partially housing the actuators.

## Patentansprüche

1. Lattenrost (101), der ausgebildet ist, quer zu einem Fahrzeug hinter einem oder mehreren Insassensitzen innerhalb einer Fahrzeugkabine zu liegen, wobei der Lattenrost eine tragende Balkenstruktur umfasst, die einen mittleren Abschnitt (104) und einen oder mehrere äußere Abschnitte (105) bildet; wobei der eine oder die mehreren äußeren Abschnitte geeignet sind, sich hinter dem Sitz in einer seitlichen Richtung des Fahrzeugs zu erstrecken, wenn der Lattenrost in dem Fahrzeug installiert ist; wobei die tragende Balkenstruktur einen oder mehrere geschwächte Verbindungsabschnitte (202) aufweist, die geeignet sind, den mittleren Abschnitt mit der Fahrzeugkabine und/oder dem einen oder den mehreren äußeren Abschnitten zu verbinden; wobei der geschwächte Verbindungsabschnitt geeignet ist, zu ermöglichen, dass der mittlere Abschnitt, sich an den Insassensitzen vorbei nach vorne bewegt und die äußeren Abschnitte hinter den Sitzen verbleiben, indem die geschwächten Verbindungsabschnitte vom mittleren Abschnitt getrennt und/oder verformt werden.

2. Lattenrost nach Anspruch 1, wobei der mittlere Abschnitt ein oder mehrere Verstärkungselemente (305) umfasst, die dem geschwächten Verbindungsabschnitt in Längsrichtung des Fahrzeugs folgen, wenn der Lattenrost in dem Fahrzeug installiert ist; wobei die Verstärkungselemente dabei helfen, den mittleren Abschnitt an dem Insassensitz vorbeizuführen.

3. Lattenrost nach einem der vorhergehenden Ansprüche, wobei die geschwächten Verbindungsabschnitte faltbare Verbindungsabschnitte umfassen, die so konstruiert sind, dass sie die äußeren Abschnitte während des Aufpralls des Fahrzeugs falten.

4. Lattenrost nach einem der vorhergehenden Ansprüche, wobei die äußeren Abschnitte von Behälterabdeckungen getragen werden, wobei die Behälterabdeckungen den Zugang zu einem Lagerbehälter ermöglichen.

5. Lattenrost nach einem der vorhergehenden Ansprüche, wobei die tragende Balkenstruktur tragende Balken (401, 402) umfasst, die entlang der vorderen, hinteren und äußeren Seitenflächen des Lattenrostes relativ zu einer Längsrichtung des Fahrzeugs verlaufen, wenn der Lattenrost in dem Fahrzeug installiert ist, wobei die tragenden Balken (401) in den äußeren Seitenflächen des Lattenrostes in der seitlichen Richtung relativ zu der Längsrichtung des Fahrzeugs geschwächt sind, um die äußeren Abschnitte dabei zu unterstützen, hinter dem einen oder den mehreren Insassensitzen zu bleiben, wenn sich der mittlere Abschnitt an den Insassensitzen vorbei bewegt.

6. Lattenrost nach einem der vorhergehenden Ansprüche, ferner umfassend Latten (302), die mit der tragenden Balkenstruktur durch Lattenverbindungen verbunden sind; wobei die Lattenverbindungen eine Fangstruktur an der Vorderseite des Lattenrostes aufweisen, die die Latten an dem vorderen tragenden Balken festhält, und eine Freigabestruktur an dem hinteren tragenden Balken wenigstens an dem äußeren Abschnitt des Lattenrostes, die es ermöglicht, dass sich die Latten von dem tragenden Balken lösen.

7. Lattenrost nach einem der vorhergehenden Ansprüche, der ferner Neigungsversteller umfasst, die die äußeren Abschnitte relativ zum mittleren Abschnitt des Lattenrostes neigen; wobei der Neigungsversteller durch einen oder mehrere Betätigungselemente (802) betätigt wird, um die äußeren Abschnitte zu neigen, vorzugsweise einen oder mehrere Elektromotoren; wobei der Neigungsversteller in einem äußeren Abschnitt des Lattenrostes untergebracht ist.

8. Lattenrost nach Anspruch 7, wenn abhängig von 4, wobei die Behälterabdeckungen in der Oberseite Aussparungen zur wenigstens teilweisen Unterbringung der Betätigungselemente enthalten.

## Revendications

1. Plate-forme de lit à lattes (101) adaptée pour être posée transversalement à un véhicule derrière un ou plusieurs sièges d'occupant à l'intérieur d'une cabine de véhicule, la plate-forme de lit comprenant une structure de poutre de support formant une partie centrale (104) et une ou plusieurs parties extérieures (105) ; dans lequel la ou les parties extérieures sont adaptées pour s'étendre derrière le siège dans une direction latérale du véhicule lorsque la plate-forme de lit est installée dans le véhicule ; dans lequel la structure de poutre de support comporte une ou plusieurs parties de liaison affaiblies (202) adaptées pour connecter ladite partie centrale à l'habitacle du véhicule et/ou la ou les parties extérieures ;
dans lequel ladite partie de liaison affaiblie est adaptée pour permettre à la partie centrale d'avancer au-delà desdits sièges d'occupant et auxdites parties extérieures de rester derrière lesdits sièges par déconnexion et/ou déformation des parties de liaison affaiblies de la partie centrale.

2. Plate-forme de lit selon la revendication 1, dans laquelle la partie centrale comprend un ou plusieurs éléments de renforcement (305) suivant ladite partie de liaison affaiblie dans la direction longitudinale du véhicule lorsque la plate-forme de lit est installée dans le véhicule ; lesdits éléments de renfort aidant au guidage de la partie centrale au-delà du siège de l'occupant.

3. Plate-forme de lit selon l'une quelconque des revendications précédentes, dans laquelle les parties de liaison affaiblies comprennent des parties de liaison pliables conçues pour plier les parties extérieures lors de la collision du véhicule.

4. Plate-forme de lit selon l'une quelconque des revendications précédentes, dans laquelle les parties extérieures sont supportées par des couvercles de récipient, lesdits couvercles de récipient donnant accès à un récipient de stockage.

5. Plate-forme de lit selon l'une quelconque des revendications précédentes, dans laquelle la structure de poutre de support comprend des poutres de support (401, 402) qui s'étendent le long des surfaces latérales avant, arrière et extérieure de la plate-forme de lit par rapport à une direction longitudinale du véhicule lorsque la plate-forme de lit est installée dans le véhicule, dans lequel les poutres de support (401) dans les surfaces latérales extérieures de la plate-forme de lit dans la direction latérale par rapport à la direction longitudinale du véhicule sont affaiblies pour aider les parties extérieures à rester derrière le ou les sièges des occupants lorsque la partie centrale dépasse les sièges des occupants.

6. Plate-forme de lit selon l'une quelconque des revendications précédentes, comprenant en outre des lattes (302) qui sont reliées à ladite structure de poutre de support par des liaisons de lattes ;
dans lequel lesdites liaisons de lattes ont une structure d'accrochage à l'avant de la plate-forme de lit qui retient les lattes à la poutre de support avant et une structure de libération à la poutre de support arrière au moins sur ladite partie extérieure de la plate-forme de lit qui permet aux lattes de se dégager de la poutre porteuse.

7. Plate-forme de lit selon l'une quelconque des revendications précédentes comprenant en outre des dispositifs d'inclinaison qui inclinent les parties extérieures par rapport à la partie centrale de la plate-forme de lit ; dans lequel l'inclinaison est actionnée par un ou plusieurs actionneurs (802) pour incliner les parties extérieures de préférence sur un ou plusieurs moteurs électriques ; dans lequel le dispositif d'inclinaison est logé dans une partie extérieure de la plate-forme de lit,

8. Plate-forme de lit selon la revendication 7 lorsqu'elle dépend de la revendication 4, dans laquelle les couvercles de récipient contiennent des évidements dans la surface supérieure pour loger au moins partiellement les actionneurs.
